# EUROPEAN PATENT SPECIFICATION

(11) **EP 2 484 205 B1**
(45) Date of publication and mention of the grant of the patent: **11.12.2013**
(21) Application number: 12150712.3
(22) Date of filing: 11.01.2012
(51) Int. Cl.: A01K 1/01

(54) **Manure removal device and method for the automatic removal of manure**
Dungentfernungsvorrichtung und Verfahren zum automatischen Entfernen von Dung
Dispositif d'élimination de fumier et procédé pour l'élimination automatique de fumier

(30) Priority: 07.02.2011 NL 1038566; 11.10.2011 NL 2007568
(43) Date of publication of application: 08.08.2012
(73) Proprietor: Lely Patent N.V., 3147 PA Maassluis (NL)
(72) Inventor: Van Den Beukel, Huibrecht Johannes Arjen, 3146CG Maassluis (NL); Van Berkel, Sebastianus Arnoldus Nicolaas Maria, 2628 RR Delft (NL); Özcan, Gokhan Kemal, 3067 TR Rotterdam (NL)
(74) Representative: Jennen, Peter Leonardus Hendricus

(56) References cited:
- EP-A1- 1 369 017
- WO-A1-2010/080029
- WO-A1-2010/095928
- FR-A1- 2 732 333
- NL-C- 2 002 200

## Description

The invention relates to a manure-removal device according to the preamble of Claim 1.

A manure-removal device of this type is known from patent NL2002200 which describes an autonomously displaceable vehicle with a manure slide for moving manure. In addition, this vehicle is provided with a spray nozzle at the front for spraying the floor area with liquid from a tank. The vehicle cooperates with a filling station for filling the tank.

The problem of a manure-removal device of this type is that filling of the mobile manure-displacement unit takes a relatively long time, thus reducing the total capacity of the manure-removal device. The filling station of the known manure-removal device is often placed at a considerable distance from the water connection, such as a public drinking water connection. In addition, the liquid supply line from the drinking water connection to the filling station often has a relatively small diameter in order to save costs. This means that the liquid supplied to the manure-removal device has to overcome a great deal of resistance, as a result of which the container can only be filled slowly.

WO2010/080029 discloses an autonomous mobile oil spraying robot for reducing dust in an animal house. The robot is provided with an oil reservoir and a water reservoir to prepare an oil-water emulsion on the fly. A provisioning station is provided comprising an oil and a water tank for filling the oil and water reservoir of the robot by means of gravity.

It is an object of the invention to provide an alternative manure-removal device.

This is achieved by a manure-removal device of the abovementioned type, characterized by the features of the characterizing part of claim 1.

The manure-removal device according to the invention makes it possible for the water supply to the manure-removal device to be independent from the length and internal diameter of the supply line. An additional advantage is the fact that the container is filled as a result of the force of gravity. This means that the container is always filled in the same amount of time, irrespective of the pressure in the liquid line. In winter, it is possible that the temperature in a shed or sty also drops below freezing. In order to ensure that no ice layer forms on the floor area, the temperature of the air above the floor area is measured, making it possible to stop wetting at a temperature near or below freezing.

According to a particular embodiment of the manure-removal device, the buffer vessel comprises a liquid inlet which is situated above the maximum liquid level of the liquid. As the buffer tank is situated in a soiled environment, the purity of the liquid in the buffer tank cannot be guaranteed. By placing the liquid inlet in the manner described, no possibly soiled liquid can flow back from the buffer tank into the water conduit.

In a further particular embodiment according to the invention, the buffer vessel comprises a level control means. Such a control means may, for example, be configured in a simple manner as a float. It is also possible to control the level by means of a level sensor which is coupled to a valve in the supply line. Such an electronic control means makes it possible to prepare mixtures of various liquids by means of several level sensors which indicate several levels.

In yet a further embodiment according to the invention, the volume of the buffer vessel is approximately equal to the volume of the container, as a result of which it is possible to fill the container quickly in one go. In addition, the container on the manure-removal unit does then not require a top level sensor, since an empty container cannot be overfilled.

In particular, the container inlet has an inner diameter of at least 10 mm, in particular 13 mm. It has been found, that these dimensions allow quick emptying of the buffer vessel without being impractical.

It is advantageous if the buffer vessel comprises an activable pressure means for pressurizing the spraying liquid. This allows the container to be filled more quickly than is possible solely by the force of gravity. In addition, with this embodiment, it is not necessary to place the buffer vessel in a higher position than the container inlet. The pressure means may comprise a compressed air connection by means of which a sealed buffer vessel can be pressurized. It is also possible for a pump in the buffer vessel outlet to serve as pressure means.

It is furthermore advantageous if the buffer vessel can be connected to the flushing installation of a milking device in order to receive flushing water from the milking device. Flushing water from a milking device is usually discharged into the manure pit or in the sewer. By using this flushing water, less water is required on balance and savings can be made with regard to sewage costs. The flushing water may be slightly acidic due to residues of acidic cleaning agent. This is particularly advantageous as the acid binds the ammonia present in the manure, so that the overall pollution of the environment by the shed or sty due to the emission of ammonia is reduced.

In addition, it is advantageous if the buffer vessel comprises an additive supply device. Certain additives, such as acids or bacteria mixtures in the spraying liquid may help to bind the ammonia. Additives in the form of salts may be used as antifreeze in order to prevent the manure and spraying liquid from freezing in winter. As a result of this embodiment, the buffer vessel can be used as a preparation vessel. If desired, mixing means, such as a stirring mechanism, can be fitted in the buffer vessel in order to improve mixing and solubility.

In an embodiment according to the invention, the buffer vessel is a drinking trough accessible at its uppersite. All stables require drinking troughs and by combining both, no separate buffer vessel is required. An additional advantage is the fact that the drinking trough is replenished more often in this way, as a result of which drinking water of a higher quality is made available.

In a further embodiment according to the invention, the manure-removal device comprises a plurality of stationary buffer vessels. Each buffer vessel may contain a different type of liquid, such as acid or alkaline flushing water from the milking installation or rainwater. By using separate buffer vessels, the liquids will not be mixed. Mixing different types of liquids may lead to encrustations or undesired reactions.

It is advantageous if the manure displacement unit comprises a pump for sucking in liquid from the buffer vessel. Thus, the buffer vessel can be of simple design without an expensive electrical connection. Since the manure removal unit is often provided with a power supply for driving it, for example in the form of a battery, this can be used for driving the pump. It is also simple to use the controller of the manure-removal unit for actuating the pump.

It is particularly advantageous if the manure displacement unit comprises an autonomously displaceable manure robot. The container of such a manure robot is only able to hold relatively small amounts of spraying liquid and will therefore have to be filled up repeatedly. This can be achieved in a simple manner by using one or more small buffer vessels which are (gradually) filled while the manure robot removes the manure. In particular, the charging station for the manure robot is also fitted near the buffer vessel so that charging of the battery and filling up the container can take place simultaneously.

The invention furthermore relates to a method for removing manure with a manure removal device according to claim 13.

In a particular form of the method according to the invention, stopping the wetting action also comprises discharging the liquid from the container. In order to prevent any water remaining in the manure displacement unit from freezing and damaging the inside, the container is emptied. Said discharging preferably takes place at the charging station as that is where the manure displacement unit is stationary while charging.

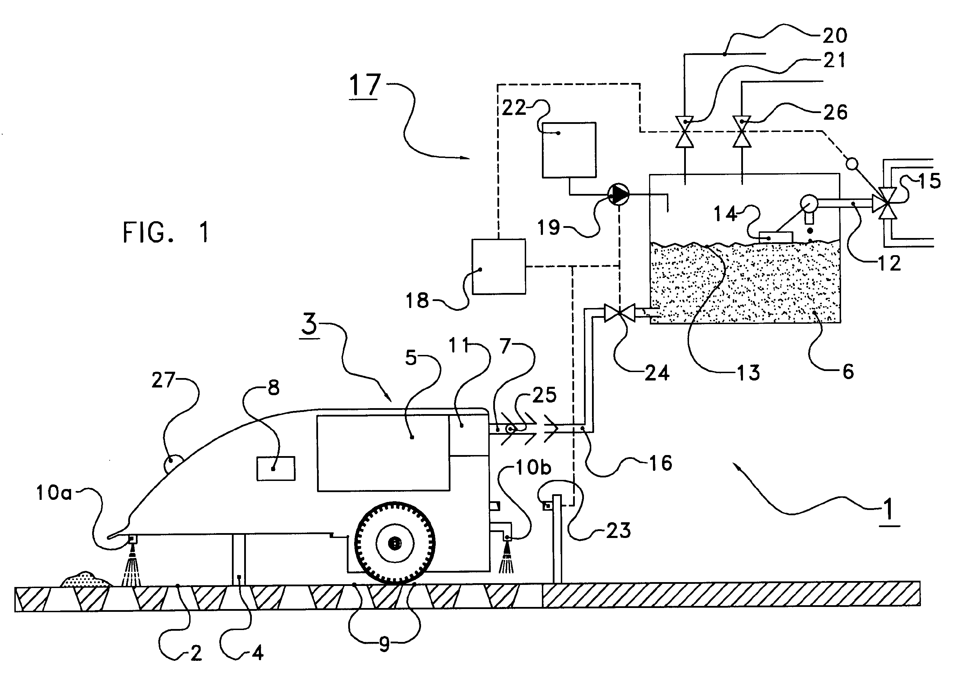

The invention will now be explained in more detail with reference to the drawing, in which Figure 1 diagrammatically shows a side view of a manure removal device according to the invention.

Figure 1 shows a manure-removal device 1 for the automatic removal of manure from a floor area 2, and having a mobile manure displacement unit 3 comprising a container 5 for storing spraying liquid, a manure displacement member 4 and at least one wetting device for wetting the floor area 2, which container 5 comprises a container inlet 7 **characterized in that** the manure-removal device 1 furthermore comprises a stationary buffer vessel 6 and the container inlet 7 can be coupled to the buffer vessel 6. The manure displacement unit 3 comprises an autonomously displaceable manure robot 3. Using navigation means (not shown) which are known per se, such as ultrasonic sensors and a control unit 8, said manure robot 3 is able to take a predetermined route through the shed or sty. The manure robot 3 rests on a slatted floor 2 via a manure slide 4 and two independently driven wheels. The slatted floor 2 has slot-shaped grate openings 9 for allowing manure to pass through to the manure pit which is situated underneath the floor area 2. While the manure robot 3 is advancing, the manure displacement member 4, in the form of a manure slide 4, forces manure through the grate openings. In order to prevent the formation of a manure film on the floor, the floor area 2 is wetted using a wetting device. Said wetting device comprises two spray nozzles 10A, 10B, one at the front and one at the back. Spraying liquid is pumped from the container 5 to the spray nozzles 10A, 10B by means of a pump 11.

Figure 1 shows a buffer vessel 6 with a buffer vessel inlet 12 which is situated above the maximum liquid level 13 of the liquid. In addition, the buffer vessel 6 also comprises a level control means which is configured as a float 14 connected to a shut-off valve. The volume of the buffer vessel 6 is approximately equal to the volume of the container 5.

Upstream of the buffer vessel inlet 12, a three-way valve 15 is installed which can optionally connect the buffer vessel inlet 12 to a water connection or to the connection of the flushing installation of a milking device (not shown) for receiving flushing water from the milking device. A control unit 18 is provided for controlling said three-way valve 15 and other valves. The buffer vessel 6 comprises an additive supply device 17. Said control unit 18 also controls the metering pump 19 of said additive supply device 17. The control connection to the control unit is indicated by means of a dashed line.

In an alternative embodiment (not shown), the additive is metered directly into the stream of liquid in the outlet of the buffer vessel 6. To this end, the metering pump 19 is driven directly by a flow meter which is provided in the outlet.

In the illustrated embodiment, the buffer vessel 6 is arranged at a height of approximately 2 m above the floor area 2. This results in a liquid pressure of 0.2 bar at the location of the container inlet 7. In combination with an inner diameter of the container inlet 7 of 13 mm, this pressure results in a very suitable emptying speed of the buffer vessel 6.

At the top, the illustrated buffer vessel 6 is covered and comprises an activable pressure means for pressurizing the liquid. This pressure means is configured as a compressed air connection 20 which can be opened or closed by the control unit via a compressed-air valve 21.

In a device (not shown), the buffer vessel 6 is open at the top, as a result of which the buffer vessel 6 is a drinking trough accessible from above. To this end, the maximum liquid level 13 is at drinking level (approximately 1 m) and the liquid pressure at the location of the container inlet 7 is less than 0.1 bar. In order to actually be able to pass the liquid from the buffer tank 6 sufficiently quickly into the container 5, the manure displacement unit 3 comprises a pump 11 for sucking in liquid from the buffer vessel 6. Said pump 11 acts as a pump both for sucking in the spraying liquid and for pumping the spraying liquid to the spray nozzles 10A,10B.

The manure displacement unit 3 also comprises a temperature sensor 27 for measuring the ambient temperature and emitting a temperature signal. The wetting device can be controlled by the temperature signal. To this end, the control unit 8 receives the temperature signal and, on the basis of this signal, determines whether the measured temperature is sufficiently high so there is no risk of the floor area 2 and/or the inside of the manure displacement unit 3 freezing. Pump 11 is particularly susceptible to freezing. The control unit 8 compares the temperature signal to a frost threshold value and, based on the comparison, decides to start or stop wetting. A first frost threshold value for deciding to stop wetting is 3°C and a second frost threshold value for deciding to start wetting again is 5°C. Both values can be adjusted by an operator via an input element (not shown) in order to be able to observe an additional safety margin. During periods of warm weather, the frost threshold value can be used in order to provide additional wetting above a certain temperature of, for example, 25°C so as to provide additional cooling.

The manure-removal device 1 operates as follows.

Firstly, the buffer vessel 6 is filled. In order to prevent the floor area 2 from freezing, the control unit 18 actuates the metering pump 19 in order to meter a certain amount of concentrated grit from the additives vessel 22 into the buffer vessel 6. Subsequently, the control unit 18 actuates the three-way valve 15 to allow flushing water from the milking installation (not shown) to enter. The float 14 follows the liquid level and closes off the buffer vessel inlet 12 at the maximum level.

When the manure robot 3 has finished its round, the manure robot 3 moves towards the buffer vessel 6. The buffer vessel outlet 16 is positioned in such a manner that the container inlet 7 slides exactly across the buffer vessel outlet 16. The container valve 25 in the container inlet 7 is pushed open mechanically by the sliding movement. A contact sensor 23 at the end point detects the presence of the manure robot 3 and sends a signal to the control unit 18. At the same time, the manure robot 3 makes contact with the charging station (not shown) in order to charge the battery. The control unit 18 opens the buffer vessel outlet valve 24, as a result of which the contents of the buffer vessel 6 flow into the container 5. At the same time, the compressed air valve 21 is also opened, as a result of which the buffer vessel 6 is pressurized. A level sensor (not shown) in the container 5 emits a signal when the container 5 is full, after which the control unit 8 of the manure robot 3 actuates the wheels and the manure robot 3 drives off. The container valve 25 is then automatically closed. The contact sensor 23 senses that there is no contact, as a result of which the control unit 18 closes the buffer vessel outlet 16, the compressed air connection 20 closes and the vent valve 26 opens.

During a round, the temperature sensor 27 continuously measures the temperature of the ambient air and passes the values to the control unit 8. If the control unit 8 finds that this temperature remains below the first frost threshold value during the entire round, wetting is discontinued. When the manure robot 3 returns to its charging point, the control unit 8 actuates the pump 11 continuously until the level sensor in the container 5 emits an "empty" signal. The liquid which remains in the container 5 is discharged in this way. The container 5 is now no longer filled from the buffer vessel 6. The manure displacement unit 3 then continues its program, but without wetting the floor area 2. The temperature continues to be measured while the route is being followed. If said temperature remains above the second frost threshold value for the entire route, the manure displacement unit 3 will be filled up again upon its return to the charging station and the next route will take place again with an activated wetting device.

The invention is not limited to the manure robot 3 described here, but can also be applied to a manure-removal device configured as a manure slide which is pulled across the floor area 2 to be cleaned by means of a chain or cable. Since such manure slides often extend across the entire width of the floor or walkway, they have a larger internal volume, in which volume the container 3 is preferably accommodated.

## Claims

1. Manure-removal device (1) for the automatic removal of manure from a floor area (2), and having a mobile manure displacement unit (3) comprising a container (5) for storing spraying liquid, a manure displacement member (4) and at least one wetting device for wetting the floor area (2), which container comprises a container inlet (7) **characterized in that** the manure-removal device (1) furthermore comprises a stationary buffer vessel (6) and the container inlet (7) is coupleable to the buffer vessel (6), and **in that** the manure displacement unit (3) comprises a temperature sensor (27) for measuring the ambient temperature and emitting a temperature signal, wherein the wetting device is controllable by the temperature signal.

2. Manure-removal device (1) according to Claim 1 **characterized in that** the buffer vessel (6) comprises a buffer vessel inlet (12) which is situated above the maximum liquid level (13) of the liquid.

3. Manure-removal device (1) according to one of the preceding claims **characterized in that** the buffer vessel (6) comprises a level control means.

4. Manure-removal device (1) according to one of the preceding claims, **characterized in that** the volume of the buffer vessel (6) is approximately equal to the volume of the container (5).

5. Manure-removal device (1) according to one of the preceding claims, **characterized in that** the container inlet (7) has an inner diameter of at least 10 mm, in particular 13 mm.

6. Manure-removal device (1) according to one of the preceding claims, **characterized in that** the buffer vessel (6) comprises an activable pressure means (21) for pressurizing the spraying liquid.

7. Manure-removal device (1) according to one of the preceding claims, **characterized in that** the buffer vessel (6) is connectible to the flushing installation of a milking device in order to receive flushing water from the milking device.

8. Manure-removal device (1) according to one of the preceding claims, **characterized in that** the buffer vessel comprises an additive supply device (17).

9. Manure-removal device (1) according to one of the preceding claims, **characterized in that** the buffer vessel (6) is a drinking trough accessible at its upperside.

10. Manure-removal device (1) according to one of the preceding claims, **characterized in that** the manure-removal device (1) comprises several stationary buffer vessels (6).

11. Manure-removal device (1) according to one of the preceding claims **characterized in that** the manure displacement unit (3) comprises a pump (11) for sucking in liquid from the buffer vessel (6).

12. Manure-removal device (1) according to one of the preceding claims, **characterized in that** the manure displacement unit (3) comprises an autonomously displaceable manure robot (3).

13. Method for the removal of manure using a manure-removal device according to one of the preceding claims, wherein the manure displacement unit (3) comprises a control unit (8) **characterized in that** the ambient temperature is measured using the temperature sensor (27) and wherein the control unit (8) compares the temperature signal to a frost threshold value and, based on the comparison, decides to start or stop wetting.

14. Method according to claim 13, **characterized in that** stopping the wetting action also comprises discharging the liquid from the container (5).

## Patentansprüche

1. Dungentfernungsvorrichtung (1) zum automatischen Entfernen von Dung von einer Bodenfläche (2) und mit einer mobilen Dungverschiebeeinheit (3), umfassend einen Behälter (5) zum Speichern einer Sprühflüssigkeit, ein Dungverschiebeelement (4) und wenigstens eine Befeuchtungsvorrichtung zum Nässen der Bodenfläche (2), wobei der Behälter einen Behältereinlass (7) umfasst,
**dadurch gekennzeichnet, dass** die Dungentfernungsvorrichtung (1) des Weiteren einen stationären Pufferbehälter (6) umfasst und der Behältereinlass (7) mit dem Pufferbehälter (6) verbindbar ist, und dass die Dungverschiebeeinheit (3) einen Temperatursensor (27) zum Messen der Umgebungstemperatur und zum Ausgeben eines Temperatursignals umfasst, wobei die Befeuchtungsvorrichtung durch das Temperatursignal steuerbar ist.

2. Dungentfernungsvorrichtung (1) nach Anspruch 1,
**dadurch gekennzeichnet, dass** der Pufferbehälter (6) einen Pufferbehältereinlass (12) umfasst, welcher über dem maximalen Flüssigkeitsniveau (13) der Flüssigkeit angeordnet ist.

3. Dungentfernungsvorrichtung (1) nach einem der vorhergehenden Ansprüche,
**dadurch gekennzeichnet, dass** der Pufferbehälter (6) eine Niveauregelvorrichtung umfasst.

4. Dungentfernungsvorrichtung (1) nach einem der vorhergehenden Ansprüche,
**dadurch gekennzeichnet, dass** das Volumen des Pufferbehälters (6) ungefähr gleich dem Volumen des Behälters (5) ist.

5. Dungentfernungsvorrichtung (1) nach einem der vorhergehenden Ansprüche,
**dadurch gekennzeichnet, dass** der Behältereinlass (7) einen Innendurchmesser von wenigstens 10 mm, insbesondere von 13 mm, aufweist.

6. Dungentfernungsvorrichtung (1) nach einem der vorhergehenden Ansprüche,
**dadurch gekennzeichnet, dass** der Pufferbehälter (6) ein aktivierbares Druckmittel (21) umfasst, um die Sprühflüssigkeit unter Druck zu setzen.

7. Dungentfernungsvorrichtung (1) nach einem der vorhergehenden Ansprüche,
**dadurch gekennzeichnet, dass** der Pufferbehälter (6) mit der Spüleinrichtung einer Melkvorrichtung verbindbar ist, um das Spülwasser von der Melkvorrichtung aufzunehmen.

8. Dungentfernungsvorrichtung (1) nach einem der vorhergehenden Ansprüche,
**dadurch gekennzeichnet, dass** der Pufferbehälter eine Zuführvorrichtung (17) für Zusätze umfasst.

9. Dungentfernungsvorrichtung (1) nach einem der vorhergehenden Ansprüche,
**dadurch gekennzeichnet, dass** der Pufferbehälter (6) ein Tränketrog ist, welcher von seiner oberen Seite zugänglich ist.

10. Dungentfernungsvorrichtung (1) nach einem der vorhergehenden Ansprüche,
**dadurch gekennzeichnet, dass** die Dungentfernungsvorrichtung (1) mehrere stationäre Pufferbehälter (6) umfasst.

11. Dungentfernungsvorrichtung (1) nach einem der vorhergehenden Ansprüche,
**dadurch gekennzeichnet, dass** die Dungverschiebeeinheit (3) eine Pumpe (11) zum Ansaugen von Flüssigkeit aus dem Pufferbehälter (6) umfasst.

12. Dungentfernungsvorrichtung (1) nach einem der vorhergehenden Ansprüche,
**dadurch gekennzeichnet, dass** die Dungverschiebeeinheit (3) einen autonom verfahrbaren Dungroboter (3) umfasst.

13. Verfahren zum Entfernen von Dung unter Verwendung einer Dungentfernungsvorrichtung nach einem der vorhergehenden Ansprüche, wobei die Dungverschiebeeinheit (3) eine Steuereinheit (8) umfasst,
**dadurch gekennzeichnet, dass** die Umgebungstemperatur unter Verwendung des Temperatursensors (27) gemessen wird und wobei die Steuereinheit (8) das Temperatursignal mit einem Frostgrenzwert vergleicht und auf der Grundlage des Vergleichs entscheidet, das Befeuchten zu starten oder einzustellen.

14. Verfahren nach Anspruch 13,
**dadurch gekennzeichnet, dass** das Einstellen der Befeuchtungshandlung auch das Entleeren der Flüssigkeit aus dem Behälter (5) umfasst.

## Revendications

1. Dispositif d'élimination de fumier (1) pour l'élimination automatique de fumier d'une zone de plancher (2), et comportant une unité mobile de déplacement de fumier (3) comprenant un contenant (5) pour stocker un liquide de pulvérisation, un élément de déplacement de fumier (4) et au moins un dispositif de mouillage pour mouiller la zone de plancher (2), lequel contenant comprend une entrée de contenant (7), **caractérisé en ce que** le dispositif d'élimination de fumier (1) comprend en outre une cuve stationnaire (6)de tampon et l'entrée de contenant (7) peut être accouplée avec la cuve de tampon (6), et **en ce que** l'unité de déplacement de fumier (3) comprend un capteur de température (27) pour mesurer la température ambiante et émettre un signal de température, dans lequel le dispositif de mouillage peut être commandé par le signal de température.

2. Dispositif d'élimination de fumier (1) selon la revendication 1, **caractérisé en ce que** la cuve de tampon (6) comprend une entrée de cuve de tampon (12) qui est située au-dessus du niveau de liquide maximum (13) du liquide.

3. Dispositif d'élimination de fumier (1) selon l'une des revendications précédentes, **caractérisé en ce que** la cuve de tampon (6) comprend un moyen de contrôle du niveau.

4. Dispositif d'élimination de fumier (1) selon l'une des revendications précédentes, **caractérisé en ce que** le volume de la cuve de tampon (6) est approximativement égal au volume du contenant (5).

5. Dispositif d'élimination de fumier (1) selon l'une des revendications précédentes, **caractérisé en ce que** l'entrée de contenant (7) possède un diamètre intérieur d'au moins 10 mm, en particulier 13 mm.

6. Dispositif d'élimination de fumier (1) selon l'une des revendications précédentes, **caractérisé en ce que** la cuve de tampon (6) comprend un moyen de pression activable (21) pour mettre sous pression le liquide de pulvérisation.

7. Dispositif d'élimination de fumier (1) selon l'une des revendications précédentes, **caractérisé en ce que** la cuve de tampon (6) peut être raccordée à l'installation de rinçage d'un dispositif de traite afin de recevoir de l'eau de rinçage à partir du dispositif de traite.

8. Dispositif d'élimination de fumier (1) selon l'une des revendications précédentes, **caractérisé en ce que** la cuve de tampon comprend un dispositif d'alimentation en additif (17).

9. Dispositif d'élimination de fumier (1) selon l'une des revendications précédentes, **caractérisé en ce que** la cuve de tampon (6) est un abreuvoir accessible au niveau de son côté supérieur.

10. Dispositif d'élimination de fumier (1) selon l'une des revendications précédentes, **caractérisé en ce que** le dispositif d'élimination de fumier (1) comprend plusieurs cuves stationnaires de tampon (6).

11. Dispositif d'élimination de fumier (1) selon l'une des revendications précédentes, **caractérisé en ce que** l'unité de déplacement de fumier (3) comprend une pompe (11) pour aspirer un liquide à partir de la cuve de tampon (6).

12. Dispositif d'élimination de fumier (1) selon l'une des revendications précédentes, **caractérisé en ce que** l'unité de déplacement de fumier (3) comprend un robot à fumier déplaçable de façon autonome (3).

13. Procédé pour l'élimination de fumier en utilisant un dispositif d'élimination de fumier selon l'une des revendications précédentes, dans lequel l'unité de déplacement de fumier (3) comprend une unité de commande (8), **caractérisé en ce que** la température ambiante est mesurée en utilisant le capteur de température (27) et dans lequel l'unité de commande (8) compare le signal de température à une valeur seuil de gel et, en fonction de la comparaison, décide de commencer ou d'arrêter le mouillage.

14. Procédé selon la revendication 13, **caractérisé en ce que** l'arrêt de l'action de mouillage comprend également l'évacuation du liquide à partir du contenant (5).
